# EUROPEAN PATENT APPLICATION

(11) **EP 4 704 122 A1**
(43) Date of publication of application: **04.03.2026**
(21) Application number: 24796854.8
(22) Date of filing: 15.04.2024
(51) Int. Cl.: H01F 6/06, F25B 21/00, H01F 6/02, H01F 6/04

(54) **MAGNETIC FIELD GENERATION DEVICE AND MAGNETIC REFRIGERATION DEVICE**

(30) Priority: 27.04.2023 JP 2023073161
(71) Applicant: Hitachi, Ltd., Tokyo 100-8280 (JP)
(72) Inventor: WAKUDA, Tsuyoshi, Tokyo 100-8280 (JP)
(74) Representative: Mewburn Ellis LLP
(86) International application number: PCT/JP2024/015026
(87) International publication number: WO 2024/225100

(57) **Abstract**

A rotary magnetic field generation device (8) is a magnetic field generation device having a magnet disc (3) in which a plurality of electromagnets (4) are arranged circumferentially, and a magnetic field working space formed by stacking the magnet discs (3) at intervals such that the plurality of electromagnets (4) face each other. In the rotary magnetic field generation device (8), an electromagnetic force working between the electromagnets (4) stacked by a support disc (2) is supported, end yokes (7) that reduce the electromagnetic force working between the electromagnets (4) are installed at both ends of the stacked magnet disc (3), the electromagnets (4) in the magnet disc (3) are arranged at the same phase positions in the magnet disc (3) such that magnetic fluxes are continuous in an axial direction of the electromagnets (4), and the electromagnets (4) at the same phase positions are connected so as to be operated with the same current.

## Description

### Technical Field

The present invention relates to a magnetic field generation device and a magnetic refrigeration device.

### Background Art

Recently, use of hydrogen has been considered as an important energy source for a decarbonized society. Hydrogen can be chemically bonded to oxygen to generate power, or burned to be used as thermal energy.

In order to realize a hydrogen society using hydrogen as an energy source, it is necessary to construct a hydrogen supply chain for manufacturing, storing, and transporting hydrogen in order to supply hydrogen to the society. When considering storage and transportation of hydrogen energy, it is useful to utilize a form of liquid hydrogen (liquefied hydrogen) whose volume is reduced to 1/800 since hydrogen gas has a low energy density.

However, since the liquefaction temperature of liquid hydrogen is minus 253 degrees, approximately 1/3 of the energy of hydrogen is used for liquefaction and cold temperature retention. Therefore, unless the production efficiency of liquid hydrogen is sufficiently high, it is not possible to take advantage of using hydrogen as an energy source. At present, the efficiency of an existing hydrogen liquefaction plant is about 30%, and further improvement of the efficiency is desired.

In recent years, highly efficient hydrogen liquefaction using a magnetocaloric effect has attracted attention. The magnetocaloric effect is a property resulting from the dependence of entropy and temperature of a magnetic body. When a magnetic field is applied to the magnetic body at a constant temperature, magnetic moments of the magnetic body are aligned by the magnetic field, and entropy decreases. On the other hand, when the magnetic field is removed in the adiabatic state, heat is absorbed from the outside (the outside is cooled), and the magnetic moment becomes random. When this is operated in a Carnot cycle manner, cooling is performed by adiabatic demagnetization.

In a magnetic refrigeration device utilizing a magnetocaloric effect, it is necessary to repeatedly apply and remove a magnetic field to and from a magnetic working substance (magnetic body), and to control a working fluid that recovers cold by heat exchange with the magnetic working substance (magnetic body). NPL 1 describes active magnetic regenerative (AMR).

The operation of the AMR consists of the following four steps: 1) A magnetic field is applied to the magnetic working substance. 2) The working fluid flows in from one direction to exchange heat. 3) The magnetic field is removed. 4) The working fluid is caused to flow in the reverse direction to recover cold. In NPL 1, a unit packed with a magnetic working substance is reciprocated in a magnetic field space formed by a permanent magnet with respect to a fixed permanent magnet, thereby repeatedly applying and removing a magnetic field to the magnetic working substance.

In PTL 1 and PTL 2, application and removal of a magnetic field are repeated by rotating a magnetic field generation device with respect to a fixed magnetic working substance. In addition, regarding a hydrogen liquefier using a magnetic refrigerator, similarly, NPL 1 discloses a liquefier combining a multi-stage AMR and a Carnot Magnetic Refrigerator (CMR) for hydrogen condensation.

On the other hand, PTL 3 discloses a method for applying and removing a magnetic field using a rotary superconducting magnet in order to increase the capacity of a magnetic refrigeration device for hydrogen liquefaction. According to this method, a group of superconducting coils facing each other with a gap therebetween is arranged side by side in a rotation direction with respect to a rotation axis, and the group of superconducting coils is rotated about the axis to repeatedly apply and remove a magnetic field to a magnetic working substance, and a large number of the groups of rotary superconducting coils are stacked to increase a working region and realize a large capacity.

### Citation List

### Patent Literature

PTL 1: JP 2006-308197 A
PTL 2: JP 2007-147209 A
PTL 3: JP 2022-136671 A

### Non-patent Literature

NPL 1: TEION KOGAKU (J. Cryo. Super. Soc. Jpn.) Vol. 50 No. 2 (2015) JP 2015-124741 A

### Summary of Invention

### Technical Problem

In a magnet (electromagnet, permanent magnet) facing each other with a gap as in the magnet disclosed in PTL 3, an electromagnetic force that attracts each other acts between the magnets. Since it is important to increase the magnetic field intensity of the gap in the magnetic refrigeration device, a magnet having a high magnetic field intensity of the gap generates a strong electromagnetic force, and a structure for supporting the magnet is required. In PTL 3, a coil support disc for supporting electromagnetic force is provided, and a magnetic disc is installed at an end of a magnet stacked with a gap, and the electromagnetic force working between the magnets is reduced using an attractive force working on the magnetic body.

The reduction of the electromagnetic force is realized by balancing the electromagnetic force of each magnetomotive force (electromagnets, permanent magnets, and the like) constituting the stacked magnet. When the balance of the magnetomotive force is lost, an unbalanced electromagnetic force is generated due to the deviation, and thus a support structure having high strength for supporting the unbalanced electromagnetic force is required.

In MRI (magnetic resonance imaging), magnets face each other with a gap therebetween, but the magnets are fixed to a structure having high strength. Also, there is no moving component in the gap between the magnets. Therefore, there is no problem of the present invention.

The present invention has been made in view of the above circumstances, and an object of the present invention is to provide a magnetic field generation device and a magnetic refrigeration device capable of suppressing generation of an unbalanced electromagnetic force while simplifying an electromagnetic force support structure.

### Solution to Problem

In order to solve the above problems, a magnetic field generation device according to the present invention is a magnetic field generation device including: a disc in which a plurality of electromagnets are arranged circumferentially; and a magnetic field working space that is formed by stacking the discs at intervals such that the plurality of electromagnets face each other, in which an electromagnetic force working between the electromagnets stacked by the disc is supported, a magnetic yoke that reduces an electromagnetic force working between the electromagnets is installed at both ends of the stacked discs, the electromagnets in the disc are disposed at same phase positions in the disc such that magnetic fluxes are continuous in an axial direction of the electromagnets, and the electromagnets at the same phase positions are connected so as to be operated with a same current.

### Advantageous Effects of Invention

According to the present invention, it is possible to provide a magnetic field generation device and a magnetic refrigeration device capable of suppressing generation of an unbalanced electromagnetic force while simplifying an electromagnetic force support structure.

### Brief Description of Drawings

[FIG. 1] FIG. 1 is a perspective view illustrating a configuration of a rotary magnetic field generation device according to an embodiment of the present invention.
[FIG. 2] FIG. 2 is a plan view illustrating a configuration of a magnet disc of the rotary magnetic field generation device according to the embodiment of the present invention.
[FIG. 3] FIG. 3 is a perspective view illustrating a shaft and a magnet disc fixed to the shaft of the rotary magnetic field generation device according to the embodiment of the present invention.
[FIG. 4] FIG. 4 is a conceptual view of a flow of magnetic flux in the rotary magnetic field generation device according to the embodiment of the present invention as viewed from the side.
[FIG. 5] FIG. 5 is a circuit diagram illustrating a wire connection method in a drive operation mode of the rotary magnetic field generation device according to the embodiment of the present invention.
[FIG. 6] FIG. 6 is a circuit diagram illustrating another wire connection method in the drive operation mode of the rotary magnetic field generation device according to the embodiment of the present invention.
[FIG. 7] FIG. 7 is a circuit diagram of a unit persistent current operation coil including a superconducting coil and a persistent current switch of the rotary magnetic field generation device according to the embodiment of the present invention.
[FIG. 8] FIG. 8 is an energy recovery circuit diagram of a stacked magnet in which module coils of the rotary magnetic field generation device according to the embodiment of the present invention are stacked.
[FIG. 9] FIG. 9 is a circuit diagram of a magnet including four coil columns arranged at a pitch of 90° in the rotary magnetic field generation device according to the embodiment of the present invention, in which each coil column includes a three-stage coil.
[FIG. 10A] FIG. 10A illustrates a plan view of an example of a wire connection method for a double pancake wound coil of the rotary magnetic field generation device according to the embodiment of the present invention.
[FIG. 10B] FIG. 10B is a conceptual side view including a partial cross section of the double pancake coil of FIG. 10A as viewed in an arrow direction I.
[FIG. 11] FIG. 11 is a conceptual side view including a partial cross section as viewed in the arrow direction I in FIG. 10A.
[FIG. 12A] FIG. 12A is a view illustrating an example of a wire connection method of double pancake wound coils 31 and 32 in which the lead-out portions of the rotary magnetic field generation device according to the embodiment of the present invention are aligned.
[FIG. 12B] FIG. 12B is a conceptual side view including a partial cross section of the double pancake coil in FIG. 12A as viewed in an arrow direction II.
[FIG. 13A] FIG. 13A is a perspective view of a layer-wound coil in which a lead-out portion of the rotary magnetic field generation device according to the embodiment of the present invention is located outside.
[FIG. 13B] FIG. 13B is a perspective view of the layer-wound coil in which the lead-out portions of the rotary magnetic field generation device according to the embodiment of the present invention aligned in the height direction are on the outer side.
[FIG. 14] FIG. 14 is a conceptual diagram of a magnetic refrigeration device using a stacked superconducting magnet having a gap according to an embodiment of the present invention.

### Description of Embodiments

Hereinafter, embodiments of the present invention will be described in detail with reference to the drawings as appropriate.

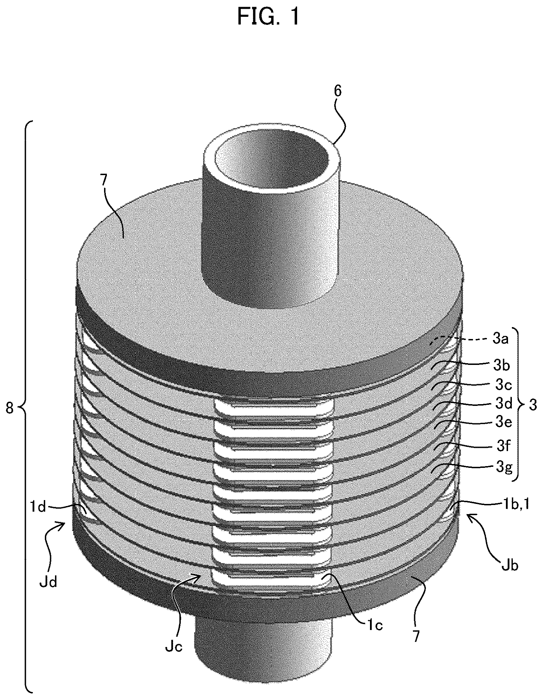

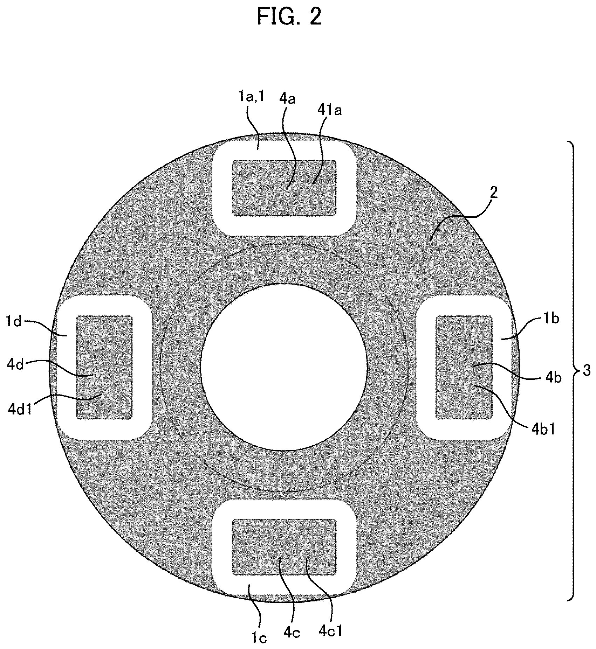

FIG. 1 is a perspective view illustrating a configuration of a rotary magnetic field generation device 8 according to an embodiment of the present invention. FIG. 2 is a plan view illustrating a configuration of a magnet disc 3 of the rotary magnetic field generation device 8. The components attached with the same symbol in the drawings are the same components or the components having a similar function.

As illustrated in FIG. 1, the rotary magnetic field generation device 8 (magnetic field generation device) includes the magnet disc 3 that generates a magnetic field. In the magnet disc 3, superconducting coils 1a, 1b, 1c, and 1d (collectively referred to as a superconducting coil 1) respectively wound in a flat plate shape with iron cores 4a1, 4b1, 4c1, and 4d1 as magnetic poles are arranged on a support disc 2 (FIG. 2) at a pitch of 90 degrees.

As illustrated in FIG. 2, the superconducting coils 1a, 1b, 1c, and 1d form electromagnets 4a, 4b, 4c, and 4d (collectively referred to as an electromagnet 4) together with iron cores 4a1, 4b1, 4c1, and 4d1, respectively.

The plurality of superconducting coils 1 (1a, 1b, 1c, and 1d) and the plurality of iron cores 4a1, 4b1, 4c1, and 4d1 are formed on both surfaces of the support disc 2.

### <Multilayer stacked magnet having gap g>

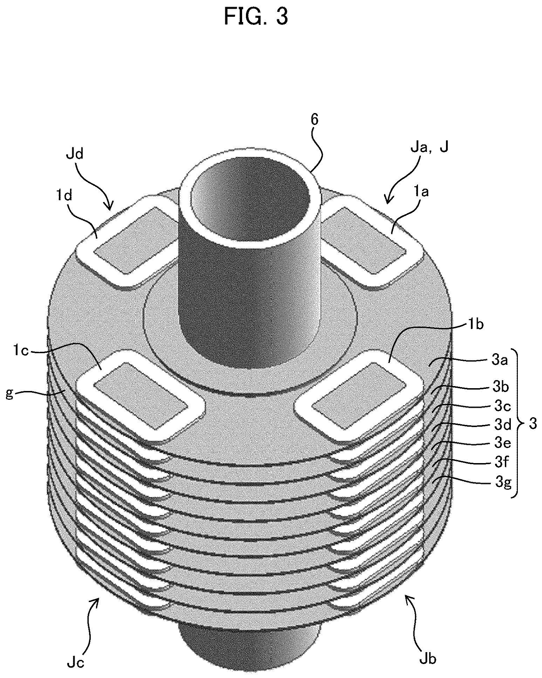

FIG. 3 is a perspective view illustrating a shaft 6 (heat transfer shaft) of the rotary magnetic field generation device 8 of the present embodiment and the magnet disc 3 (3a,......) fixed thereto.

The rotary magnetic field generation device 8 is configured by stacking magnet discs 3 (3a,......) with a void gap g interposed therebetween. In other words, the void gap g is formed in the axial direction between the electromagnets 4a, 4b, 4c, and 4d (superconducting coil 1 (1a, 1b, 1c, and 1d), iron cores 4a1, 4b1, 4c1, and 4d1) facing each other in the magnet disc 3 (3a,......). A space of the gap g is used as a magnetic field working space. The magnetic field working space is a space between the magnet discs 3 (3a,......) to which the electromagnets 4a, 4b, 4c, and 4d are attached.

A magnetic field generation means of the rotary magnetic field generation device 8 is the electromagnets 4a, 4b, 4c, and 4d of a superconducting magnet or a normal-conducting electromagnet illustrated in FIG. 3. In the present embodiment, an example in which the above-described superconducting magnet is used as the magnetic field generation means will be described.

By using a superconducting magnet as the electromagnet 4, energy consumption can be reduced.

The magnet disc 3 is integrated via the shaft 6 or the like or another structure such that the central axes thereof coincide with each other, and in the case of the rotary magnetic field generation device 8, the magnet disc 3 is driven by a motor or the like to rotate about this axis. In the rotary magnetic field generation device 8, the magnetic field working space rotates and moves as the magnet disc 3 rotates.

### <Flow of magnetic flux of rotary magnetic field generation device 8>

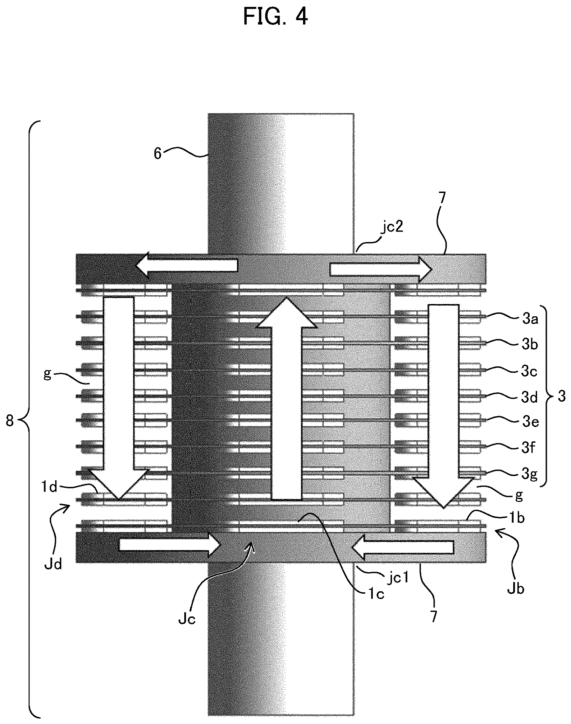

FIG. 4 is a conceptual diagram of a flow of magnetic flux in the rotary magnetic field generation device 8 of the embodiment as viewed from the side.

An end yoke 7 (magnetic yoke) of an iron disc is installed at ends jc1 and jc2 (see FIG. 4) of the rotary magnetic field generation device 8 in the direction of the shaft 6.

The superconducting coils 1a, 1b, 1c, and 1d are arranged such that magnetic fields generated in adjacent superconducting coils when a current flows are opposite to each other (see white arrows in FIG. 4). When the magnet discs 3 (3a,......) are stacked in the up-down direction, the phases of the magnet discs 3 (3a,......) are arranged such that magnetic fluxes generated by the superconducting coils 1a, 1b, 1c, and 1d through which current flows are continuous in the axial direction of the electromagnet 4.

Regarding the direction of the magnetic fluxes, the magnetic fluxes are formed in a direction perpendicular to the axis (shaft 6) at the end yoke 7, and the magnetic fluxes are arranged so as to alternate upward and downward directions. Focusing on a certain phase of the rotary magnetic field generation device 8, the magnetic fluxes are continuous in the axial direction in which the shaft 6 extends and look like one rod magnet. When the rotary magnetic field generation device 8 is viewed as a whole, it appears that the rod magnets are arranged with the polarities of the N pole and the S pole changed.

As illustrated in FIG. 4, when the directions of the rod magnets are alternately changed so that the magnetic moment becomes zero as the whole magnet, the rotary magnetic field generation device 8 can suppress the leakage magnetic field as a whole to be small because there is no magnetic loss.

In addition, since the end yoke 7 made of an iron disc is installed at the ends jc1 and jc2 of the rotary magnetic field generation device 8 in the direction of the shaft 6, the magnetic field passes through the end yoke 7 made of a magnetic body so as to have a high density, and leakage of the magnetic field from the ends jc1 and jc2 of the rotary magnetic field generation device 8 can be suppressed.

The end yoke 7 is advantageous in that the magnetic flux density is increased and the magnetic field intensity in the magnetic field working space close to the ends jc1 and jc2 of the rotary magnetic field generation device 8 is enhanced (reinforced).

When the superconducting coil 1 (1a,......) is made of a tape wire material of a copper oxide superconducting material, superconducting current transport properties of the superconducting coils 1a, 1b, 1c, and 1d are deteriorated by a magnetic field in a direction perpendicular to a tape surface. The magnetic field concentrates along the extending direction of the end yoke 7 by the end yoke 7, and the magnetic field intensity of the vertical components applied to the superconducting coils 1a, 1b, 1c, and 1d at the ends jc1 and jc2 can be reduced.

Therefore, more current can flow through the superconducting coils 1a, 1b, 1c, and 1d, which is advantageous in generating a magnetic field.

As described above, the magnet discs 3 (3a,......) are stacked with the gap g (see FIG. 4), and are integrated such that the central axis coincides with the shaft 6.

At this time, the magnet disc 3 (3a,......) is integrated using the shaft 6 of the integrated shaft. Alternatively, an in-row structure is formed at a contact portion between the magnet discs 3, and the magnet discs 3 are fitted to each other. Alternatively, the magnet disc 3 is integrated via the transmission component having the in-row structure. The magnet disc 3 is integrated to prevent positional deviation (axial deviation) of the magnet disc 3. The rotary magnetic field generation device 8 further includes a friction structure, a key structure, and the like for transmitting the rotational force of the shaft 6 to the magnet disc 3 in addition to the axial deviation, so that the rotational driving force of the shaft 6 can be transmitted to the magnet disc 3.

The support disc 2 constituting the magnet disc 3 is made of strong iron or stainless steel in order to support the attractive force between the magnet discs 3 (3a,......). However, when the electromagnetic force does not cause a problem, copper or an aluminum alloy having a high thermal conductivity may be used as the disc. When the support disc 2 is made of copper or an aluminum alloy, it is desirable because the superconducting coils 1a, 1b, 1c, and 1d can be cooled using the support disc 2 having a high thermal conductivity.

As illustrated in FIG. 1, the magnet disc 3 is integrated via the shaft 6 or another structure such that the central axes thereof coincide with each other. In the case of the rotary magnetic field generation device 8, a motor or the like (not illustrated) is used for driving and rotation about the axis of the shaft 6. In the case of the rotary magnetic field generation device 8, the magnetic field working space rotates and moves as the magnet disc 3 (3a,......) rotates.

As described above, the rotary magnetic field generation device 8 (FIG. 1) has the magnetic field working space (space of the gap g) formed by stacking the magnet discs 3 (FIG. 3) in which the plurality of electromagnets 4 are arranged circumferentially and the magnet discs 3 are stacked at intervals such that the plurality of electromagnets 4 face each other. In the rotary magnetic field generation device 8, electromagnetic force working between the electromagnets 4 stacked is supported by the support discs 2 (FIG. 2), and the end yokes 7 (FIG. 4) that reduce the electromagnetic force working between the electromagnets 4 are installed at both ends (ends jc1 and jc2) of the stacked magnet discs 3. The electromagnets 4 in the magnet disc 3 are disposed at the same phase positions in the magnet disc 3 such that magnetic fluxes are continuous in the axial direction of the electromagnets 4, and the electromagnets 4 at the same phase positions are connected so as to be operated with the same current ("drive operation mode" and "persistent current mode operation" described later).

Hereinafter, the operation of the rotary magnetic field generation device 8 configured as described above will be described.

### <Principle for reducing electromagnetic force>

First, a principle for reducing the electromagnetic force will be described.

The electromagnetic force working on the infinite length solenoid coil having no end is zero. This is symmetrical and indistinguishable when the surrounding magnetic field environment is viewed from any position of the coil, and there is no magnetic field component orthogonal to the axial direction of the solenoid coil. This is because no electromagnetic force in the axial direction is generated in each portion of the solenoid coil.

In the stacked magnet having the gap g, if such a situation is similarly created, the axial attractive force working on each of the superconducting magnets 4a, 4b, 4c, and 4d can be reduced (or zero). In an actual case, it is not possible to realize an infinite length stacked magnet having no end. Therefore, it is configured such that the magnetic field distribution felt by the coil does not form a magnetic field component orthogonal to the shaft 6 of the magnet shaft, which is formed by an infinite length solenoid.

Therefore, the magnetic flux leaking from the end of the stacked magnet is drawn into the end yokes 7 of the magnetic discs installed at the end portions jc1 and jc2 so that the stacked magnet does not feel the returning magnetic flux. For this purpose, the thickness of the end yoke 7 of the magnetic disc is made sufficiently thick. In addition, it is effective that the directions of the magnetic fluxes formed by the adjacent stacked magnets J (Ja, Jb, Jc, and Jd) are opposite to each other, and the flow of the magnetic fluxes is continuous. With this configuration, the magnetic field in the direction orthogonal to the shaft 6 felt by each stacked magnet J is reduced. As a result, the attractive force in the axial direction of the magnet constituting the stacked magnet J can be reduced.

In other words, the attractive force in the axial direction acts between the individual magnets constituting the stacked magnets Ja, Jb, Jc, and Jd, but it can be said that the attractive force in the direction of the end yoke 7 of the magnetic disc works on the magnets arranged at the ends jc1 and jc2 to cancel the mutual electromagnetic force by arranging the end yoke 7 of the magnetic disc at both ends. Of course, since the end yoke 7 originally generates a force for canceling the attractive electromagnetic force working on the superconducting coils 1a, 1b, 1c, and 1d, it is necessary to dispose a mechanical support structure between the end yokes 7 to support this force.

The state in which the electromagnetic force in the axial direction is balanced for each magnet of the stacked magnet J means that the magnetic field distribution around the magnet looks the same from any individual magnet. The electromagnetic force is generated by the magnitude of the magnetic moment and the gradient (strain) of the magnetic field. If the strength of each magnet is the same, and the degree of strain of the magnetic field around the magnet is symmetric and the degree of strain is the same between the magnets, the electromagnetic force is balanced, so that the attractive force working between the magnets becomes zero. Therefore, in order to make the attractive force working between the magnets zero (small), it is necessary that the strength of the magnet is equal to the shape of the magnetic field generated by the magnet.

### <Generation of unbalanced electromagnetic force>

Next, generation of the unbalanced electromagnetic force will be described.

As described above, the essence of canceling the axial attractive force working between the individual magnets constituting the stacked magnets Ja, Jb, Jc, and Jd is that the magnetic field environment created by the magnet around the magnet is the same as seen from any magnet. Therefore, when this condition collapses, the electromagnetic force becomes unbalanced, and a macroscopic attractive force is generated.

A cause of the unbalance is that each magnet position is shifted from the design position or the magnitude of the magnetomotive force changes. The factor of the positional deviation is not considered here because there are various factors depending on the configuration method. Only the electromagnet will be considered. As a factor of changing the magnetomotive force of the stacked magnets Ja, Jb, Jc, and Jd of the electromagnet, it is conceivable that the magnitude of the current flowing through the superconducting coils 1a, 1b, 1c, and 1d, the path of the current, and the like change.

For example, in a coil using a tape conductor using a high-temperature superconducting material such as REBCO (copper oxide superconductor) or BSCCO (bismuth-based superconductor), there is a case where the coil is wound by a non-insulating winding (NI) in which electric insulation between coil winding layers is omitted. This is a method for preventing burnout due to local heat generation at a deteriorated portion by bypassing the deteriorated portion (portion having poor superconducting current transport properties) and passing a current to a superconducting tape of an adjacent layer even when deterioration has occurred (occurs) in a part of the coil.

In such a coil, there is a possibility that a current path of the coil changes due to an unexpected situation and a magnetomotive force (ampere turn) changes. In such a situation, the magnetic field becomes unbalanced, and an unbalanced electromagnetic force is generated. In addition, when a part of the coil operating in the persistent current mode is quenched and superconduction becomes normal, a magnetic field is lost, and an unbalanced electromagnetic force is generated.

Therefore, in order not to generate the unbalanced electromagnetic force, it is necessary to keep the operating current ratio of each coil of the stacked magnets Ja, Jb, Jc, and Jd constant and not to change the current path of each of the stacked magnets Ja, Jb, Jc, and Jd. In addition, it is necessary to quickly return to the condition that the operating current ratio of each coil is kept constant and the current path is not changed so as not to increase the unbalanced electromagnetic force even if the current path cannot be completely changed at all times.

### <Method for realizing unbalanced electromagnetic force>

Next, a method for realizing the suppression of the unbalanced electromagnetic force will be described.

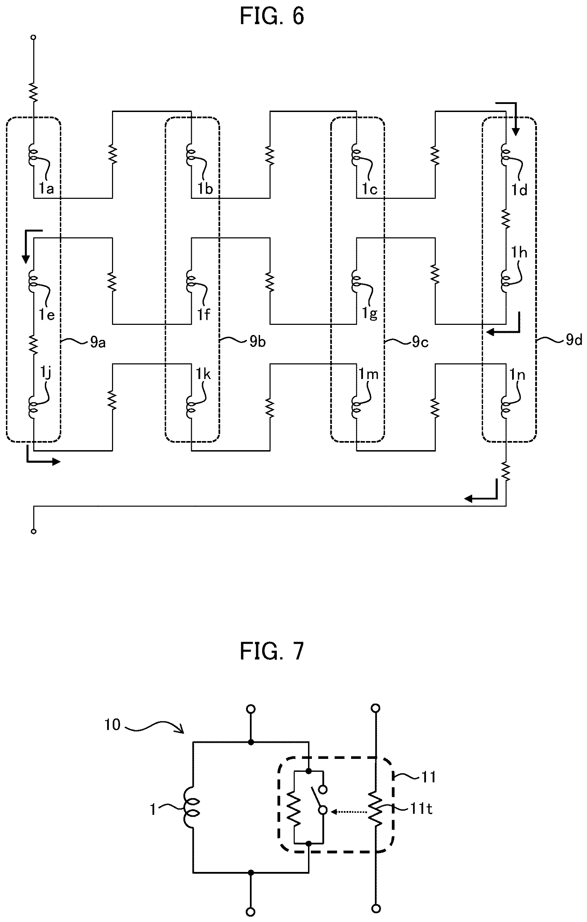

A coil group (coils of stacked magnets Ja, Jb, Jc, and Jd) arranged in the same phase with the gap g interposed therebetween in the magnet axial direction is assumed as an object of the unbalanced electromagnetic force suppression. This coil group is referred to as coil columns (magnet columns) 9a, 9b, 9c, and 9d (see FIG. 6), and superconducting coils (1a, 1e, 1j), (1b, 1f, 1k), (1c, 1g, 1m), and (1d, 1h, 1n) of individual coils are referred to as element coils.

When the superconducting coils 1a, 1e, and 1j, which are element coils of one stacked magnet Ja, are viewed, there is no current path in which a magnitude of a current flow changes in a current path between an inlet and an outlet of a superconducting coil (1a, 1e, 1j), which is an element coil.

In addition, when a superconducting coil (1b, 1f, 1k) which is an element coil of one stacked magnet Jb is viewed, a current path in which a magnitude of a current flow changes is not provided in a current path between an inlet and an outlet of the superconducting coil (1b, 1f, 1k) of the element coil, and a ratio of a current flowing through each of the superconducting coils (1a, 1e, 1j), (1b, 1f, 1k), (1c, 1g, 1m), and (1d, 1h, 1n) which are individual element coils constituting the coil columns 9a, 9b, 9c, and 9d is kept constant. The element coils of the stacked magnets Jc and Jd are the same as those of the stacked magnets Ja and Jb. As a result, it is possible to suppress the generation of the electromagnetic force unbalance of each of the stacked magnets Ja, Jb, Jc, and Jd.

In order to prevent the current path from being changed between the inlet and the outlet of each element coil of the stacked magnets Ja, Jb, Jc, and Jd, the element wire of the coil winding is insulated, and no branch path is provided. In the case of a composite conductor having two sheets of tape and an increased current capacity, the magnetic fields generated by the currents of the two paths when the composite conductor is formed into a coil can be considered to be the same, and thus, it is considered that the path does not change for the branch of the current between the two conductors.

In order to keep the current ratio flowing through each of the element coils (superconducting coils (1a, 1e, 1j), (1b, 1f, 1k), (1c, 1g, 1m), and (1d, 1h, 1n)) constituting each of the coil columns 9a, 9b, 9c, and 9d constant, the current flowing through each of the element coils can be connected so as to be continuous. Note that the current value flowing through each element coil may be continuous, and the element coils do not need to be connected in such order that the element coils are spatially adjacent. In addition, the element coil may be supplied with a current through a magnetic coupling (through a transformer or the like) instead of a physically connected connection, and the current value may be continuous.

The rotary magnetic field generation device 8 (magnetic field generation device) includes a drive operation mode (an operation method in which a superconducting magnet is connected to an excitation power supply and a current is constantly supplied from the power supply) and a persistent current mode operation, and will be described in order.

### <Drive operation mode>

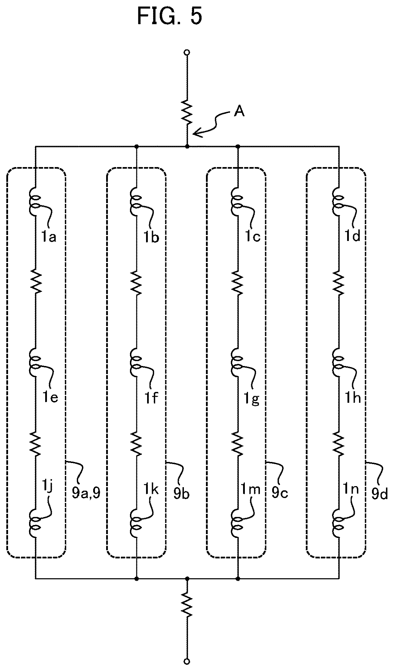

FIG. 5 is a circuit diagram illustrating a wire connection method in a case of a drive operation mode (an operation method in which a superconducting magnet is connected to an excitation power supply and a current is constantly supplied from the power supply).

FIG. 5 illustrates an example in which four coil columns 9a, 9b, 9c, and 9d are connected by three-stage element coils (1a, 1e, 1j), (1b, 1f, 1k), (1c, 1g, 1m), and (1d, 1h, 1n) at a pitch of 90°.

In the example of the wire connection method of FIG. 5, current supply to the four coil columns 9a, 9b, 9c, and 9d connected in parallel is supplied through one current path (see reference numeral A in FIG. 5).

Since there is only one current path in each of the coil columns 9a, 9b, 9c, and 9d, the currents flowing through the element coils (1a, 1e, 1j), (1b, 1f, 1k), (1c, 1g, 1m), and (1d, 1h, 1m) in the coil columns 9a, 9b, 9c, and 9d are always equal, and the ratio is kept constant.

In the example of the wire connection method of FIG. 5, current supply to the four coil columns 9a, 9b, 9c, and 9d connected in parallel is supplied through one current path (see reference numeral A in FIG. 5), and the four coil columns 9a, 9b, 9c, and 9d are designed so that electromagnetic forces are balanced.

Here, as illustrated in FIG. 3, the superconducting coils 1a, 1b, 1c, and 1d of the element coils are installed on the support disc 2, and the support disc 2 is stacked to constitute the stacked magnets Ja, Jb, Jc, and Jd. However, the present invention is not limited to this method, and for example, a winding frame structure capable of winding the element coil in the axial direction of the stacked magnet through the gap is prepared in advance. Even if a superconducting wire is wound around the winding frame to form a coil column, and the coil column is manufactured so as to be rotationally symmetric with respect to the rotation axis, the rotary magnetic field generation device 8 can be configured.

Note that the method of manufacturing the magnet is not limited to the above, and any configuration may be used as long as a current path through which the same current flows in units of coil columns is formed.

FIG. 6 is a circuit diagram illustrating another wire connection method in the drive operation mode. The arrows in FIG. 6 represent the flow of current.

In FIG. 6, four coil columns 9a, 9b, 9c, and 9d are connected to all element coils in three stages of element coils (1a, 1e, 1j), (1b, 1f, 1k), (1c, 1g, 1m), and (1d, 1h, 1n) at a pitch of 90°. That is, the element coil 1a of the coil column 9a of the input port is connected to the element coil 1b of the coil column 9b, the element coil 1b of the coil column 9b is connected to the element coil 1c of the coil column 9c, the element coil 1c of the coil column 9c is connected to the element coil 1d of the coil column 9d, and the element coil 1d of the coil column 9d is connected to the element coil 1h of the next stage of the same coil column 9d. Hereinafter, similarly connected, the element coil 1n at the final stage of the coil column 9d serves as an output port.

In the example of the wire connection method of FIG. 6, since the four coil columns 9a, 9b, 9c, and 9d are connected in series in the three-stage element coils (1a, 1e, 1j), (1b, 1f, 1k), (1c, 1g, 1m), and (1d, 1h, 1n), there is no current path in which the magnitude of the current flowing changes in the current path between the inlet and the outlet of the superconducting coil (1a, 1e, 1j), and the currents flowing through the element coils (1a, 1e, 1j), (1b, 1f, 1k), (1c, 1g, 1m), and (1d, 1h, 1m) in the coil columns 9a, 9b, 9c, and 9d are equal, and the ratio is kept constant.

### <Case of non-insulating winding>

A case where a coil around which a tape-shaped superconducting wire material is wound is designed to have a high current density will be described.

In a coil in which a tape-shaped superconducting wire material such as REBCO (copper oxide superconductor) or BSCCO (bismuth-based superconductor) is wound, when a high current density design is performed, a non-insulating winding in which a coil is wound without insulation of an element wire may be performed. It is a requirement that the current values at the inlet and the outlet of the element coil are continuous, and a change in the current path that affects the magnetic field distribution inside the coil does not occur, which does not generate the unbalanced electromagnetic force. Therefore, it is difficult to suppress the generation of the unbalanced electromagnetic force in the non-insulating winding in which the current path inside the coil changes and the path change cannot be controlled from the outside, and application to the stacked superconducting magnet (J) having the gap g is not desirable.

### <Case of persistent current mode operation>

In the case of the persistent current mode operation, similarly to the drive operation mode described above, as in the wire connection method illustrated in FIG. 5, superconducting connection is performed in units of coil columns, and a persistent current loop is configured in units of coil columns. Forming a persistent current loop means forming a superconducting closed circuit by connecting an inlet and an outlet of a current of a continuous coil column with a persistent current switch. In this case, four persistent current loops are configured for the four coil columns.

In addition, as in the wire connection method illustrated in FIG. 6, all the coils may be superconductingly connected so as to be continuous, and the inlet and the outlet of the current may be connected by a persistent current switch to form a persistent current loop. In this case, one persistent current loop is formed for four coil columns.

In either case, when the superconducting coil in the persistent current loop is quenched and enters the resistance state, current attenuation occurs inside the continuous current loop, and the currents flowing through all the coils are kept equal, so that the unbalanced electromagnetic force is not generated.

### <Application to stacked superconducting magnet (J) having gap g>

Application to a stacked superconducting magnet (J) having a gap g will be described.

In a stacked superconducting magnet having a gap to which the present invention is applied, since the number of constituent coils is large and the structure is complicated, it is difficult to form a persistent current circuit by superconducting connecting all the individual coils, and the manufacturing cost is also high.

FIG. 7 is a circuit diagram of a unit persistent current operation coil (referred to as a module coil 10) including a superconducting coil and a persistent current switch (PCS).

The module coil 10 realizes a simple method of using a persistent current magnet.

As illustrated in FIG. 7, the module coil 10 includes a superconducting coil 1 and a persistent current switch (PCS) 11.

The persistent current switch (PCS) 11 is configured to thermally turn on and off the superconducting coil 1 and includes a heater (the heater is represented by a resistance in FIG. 7). The superconducting coil 1 is turned on and off by energizing the heater.

The stacked superconducting magnet (J) having the gap g is manufactured by stacking the module coils 10 and solder-connecting the module coils 10 with normal-conducting wiring. The configuration in which the module coils 10 are stacked and the module coils 10 are soldered by normal-conducting wiring is simple to manufacture, and it is possible to realize a persistent current mode magnet in which a magnetic field is substantially stable.

### <Generation of unbalanced electromagnetic force>

Generation of the unbalanced electromagnetic force will be described.

In a case where the stacked magnet is configured by the module coil 10, since the persistent current mode operation is performed in each module coil during the steady operation, the magnetomotive force changes due to negligible current attenuation, but a constant magnetomotive force is maintained, and thus an unbalanced electromagnetic force is not generated. However, when any one of the module coils 10 quenches and the coil transitions to the normal conduction state, current attenuation occurs in the persistent current loop of the module coil 10. As a result, the magnetic field of the corresponding module coil 10 is lost, and an unbalanced electromagnetic force is generated.

If the individual element coils are constituted by module coils operated in the persistent current mode, the respective coils (element coils; module coils) are operated in the persistent current mode, a current flows (increases) in the coil adjacent to the quenched coil so as to store the magnetic flux of the coil by magnetic coupling, and a larger unbalanced electromagnetic force is generated than when only one coil is quenched.

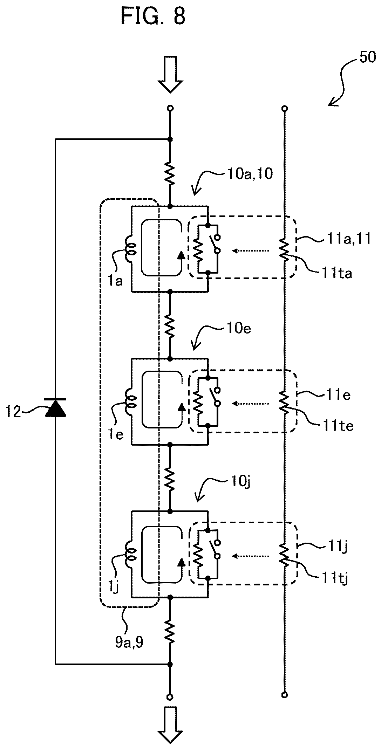

FIG. 8 is an energy recovery circuit diagram of a stacked magnet in which the module coils 10 are stacked.

As illustrated in FIG. 8, an energy recovery circuit 50 includes a module coil 10 (10a, 10e, 10j) constituting a stacked magnet and a diode 12 that loops the module coil 10. The energy recovery circuit 50 may include an external resistance that attenuates the stored energy as necessary.

The energy recovery circuit 50 illustrated in FIG. 8 is configured such that the module coils 10 (10a, 10e, 10j) (FIG. 8) constituting the coil column 9 (for example, 9a) (FIGS. 5 and 6) are tied in a row.

The energy recovery circuit 50 can minimize the generation of unbalanced electromagnetic forces by quickly turning off the persistent current switches 11 (11a, 11e, 11j) of the respective module coils 10 (10a, 10e, 10j) when a suitable known quenching detection means detects quenching.

The module coil 10 used in the present embodiment is an MgB₂ coil, and a copper sheet is inserted between coil winding layers. The energy recovery circuit 50 is designed so that, even if quenching occurs in the module coil 10, the enthalpy of its own winding and the diode 12 of the energy recovery circuit 50 (hereinafter, referred to as a large loop) recover the stored energy of the coil so as not to cause burnout.

After detecting the coil quenching using an appropriate known quenching detection means, the energy recovery circuit 50 simultaneously turns off the PCSs 11a, 11e, and 11j which are the persistent current switches 11 of all the module coils 10a, 10e, and 10j constituting the coil column 9a. When the PCSs 11a, 11e, and 11j gradually go into a resistance state, current attenuation according to the magnitude of the resistance starts in a small loop of each of the module coils 10a, 10e, and 10j.

When the voltage generated in the PCSs 11a, 11e, and 11j reaches the forward voltage of the diode 12 of the external energy recovery circuit, the energy of the coil column 9a starts to be recovered through the large loop. As the resistances of the PCSs 11a, 11e, and 11j increase, all the element coils 1a, 1e, and 1j (superconducting coil 1) have the same current in the large loop dominated by the diode 12, and energy recovery is performed. By recovering the energy, burnout of the module coils 10a, 10e, and 10j is suppressed.

By the way, due to initial current attenuation in a small loop (module coils 10a, 10e, and 10j) in the module coil 10 in which coil quenching has occurred and current attenuation in the small loop caused by variation in off-time of the PCS 11, a difference occurs in current of each module coil 10. However, the coil column 9 is connected to the large loop when the coil quenching occurs, so that the variation in the current of each of the module coils 10a, 10e, and 10j is reduced. As a result, the module coils 10a, 10e, and 10j flow with the same current.

As described above, the unbalance of the electromagnetic force can be suppressed by rapid quenching detection, blocking of the PCSs 11a, 11e, and 11j, and recovery of the current variation due to the large loop to which the diode 12 is connected. As a result, the electromagnetic unbalance among the module coils 10a, 10e, and 10j generated when the magnetic field is lost due to the coil quenching can be dramatically improved. By reducing the electromagnetic unbalance, it is possible to reduce the quantity of the electromagnetic force supporting structure of the stacked superconducting magnet (J).

When energy recovery is insufficient in the diode 12, an external resistance is connected in series to the diode 12. In addition, a resistance may be used instead of the diode 12 as long as there is no problem in the persistent current mode operation and energy can be recovered.

In addition, the heater circuits (circuits to which heaters 11ta, 11te, and 11tj are connected) for turning on and off the PCSs 11a, 11e, and 11j are configured to ensure that the same current flows simultaneously in series connection, but this is an example of implementation, and the PCS heater circuits may be configured separately, and there may be a difference in the magnitudes of the currents of the heaters 11ta, 11te, and 11tj.

### <Case 2 of persistent current mode operation>

The energy recovery circuit 50 illustrated in FIG. 8 is an excitation circuit in which the coil column 9, that is, the superconducting coils stacked in the direction of the magnet axis (shaft 6) are integrated. However, even when the module coils constituting the stacked magnet are connected in an arbitrary order, it is possible to suppress the generation of the unbalanced electromagnetic force at the time of occurrence of the quenching by turning off the PCS in units of coil columns.

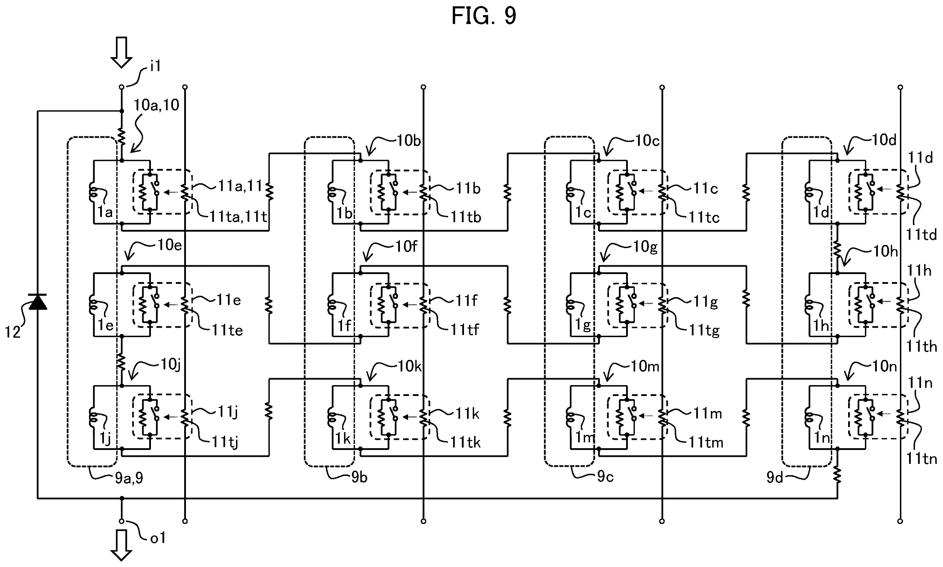

FIG. 9 is a circuit diagram of a magnet including four coil columns 9 (9a, 9b, 9c, and 9d) arranged at a pitch of 90°, in which each coil column 9 includes a three-stage coil.

The module coils 10a to 10n are connected in series between an input point i1 and an output point o1.

The coil column 9a is formed of the superconducting coils 1a, 1e, and 1j. The coil column 9b is formed of the superconducting coils 1b, 1f, and 1k. The coil column 9c is formed of the superconducting coils 1c, 1g, and 1m. The coil column 9d is formed of the superconducting coils 1d, 1h, and 1n. A diode 12 is connected in parallel with the module coils 10a to 10n so that a current flows from the output point o1 toward the input point i1.

A heater circuit having a heater 11t is configured so that the PCS 11 can be simultaneously turned off for each coil column 9. For example, a heater circuit having heaters 11ta, 11te, and 11tj is configured so that the PCSs 11a, 11e, and 11j can be simultaneously turned off with respect to the coil column 9a.

In this way, the diode 12 for energy recovery is connected to the module coils (10a to 10n) connected in a row such that both ends thereof are short-circuited to form a large loop.

In the above configuration, when any one of the module coils 10a to 10n constituting the four coil columns 9 (9a, 9b, 9c, and 9d) is quenched, all the PCSs 11 of the quenched coil columns 9 are turned off simultaneously with the quenching detection. For example, when the module coil 10a is quenched, the PCSs 11a, 11e, and 11j of the coil column 9a quenched at the same time as the quenching detection are all turned off at the same time.

When the PCSs 11a, 11e, and 11j are turned off and sufficient resistance is generated, the superconducting coils 1a, 1e, and 1j of the element coils constituting the module coils 10a, 10e, and 10j in which the PCSs 11a, 11e, and 11j are turned off are coupled with the large-loop diode 12, and a continuous current loop is formed to suppress generation of unbalanced electromagnetic force.

On the other hand, the other coil columns 9b, 9c, and 9d in which the PCS is not turned off maintain the magnetic field in the persistent current mode regardless of this operation. The current flowing through the coil column 9a in which the PCS is turned off passes through the PCSs 9b, 9c, and 9d (resistance of 0 in a superconducting state) of the coil column in which the PCS is not turned off and flows to the diode 12, and the element coil (superconducting coils 1a, 1e, and 1j) of the quenched coil column 9a is connected in series to the large loop to which the diode 12 is connected regardless of the connection order of the module coils 10a to 10n.

The module coils 10a to 10n connected in an arbitrary order as described above are configured such that the PCSs 11 can be turned off in units of coil columns 9. At the same time as the coil quenching, the PCS 11 in the coil-quenched coil column 9 is turned off, so that the generation of the unbalanced electromagnetic force can be suppressed.

### <Wire connection method>

As described above, in both the drive mode operation and the persistent current mode operation, the generation of the unbalanced electromagnetic force can be suppressed by realizing a continuous current path. Therefore, in the case of constituting the stacked magnet J having the gap g, the element coil (superconducting coil 1) may be connected by a simple method.

The most reasonable magnet configuration method is a method of configuring a magnet disc module (not illustrated) in which the magnet discs 3 (FIG. 1) are stacked in advance, and stacking the magnet disc module. Specifically, current connection between the element coils (superconducting coils 1) (FIG. 1) is made in advance inside the magnet disc module, and after the magnet discs 3 are stacked, current connection is made between the upper and lower magnet discs 3. When the stacked magnet J is configured using the persistent current mode magnet, that is, the module coil 10, the module coils 10 are connected to each other by soldering with a copper wire which is easy to handle. However, in the steady operation state, a current flows in a loop shape in the module coil 10. Therefore, since no current flows through the connection copper wire between the module coils 10, heat generation is not taken into consideration so much, and connection can be easily performed.

On the other hand, in the case of the magnet of the drive mode operation, a current always flows through the jumper wire between the coils. Therefore, it is essential to reduce Joule heating of the jumper wire and the solder connection portion. In this case, the coil lead wires of the adjacent element coils mounted on the support disc 2 (FIG. 1) must be brought into close contact with each other and be connected with a length having a sufficient connection area.

A high-temperature superconducting wire material generally has small proof stress against bending or the like, and when the bending radius is large, current transport properties are deteriorated. Therefore, it is necessary to route the wire rod with minimum bending and then connect the wire rod. In order to perform connection between adjacent coils with minimum bending or twisting, the wires are connected so as to be arranged on a straight line as much as possible with the lead-out portions of the adjacent coils aligned.

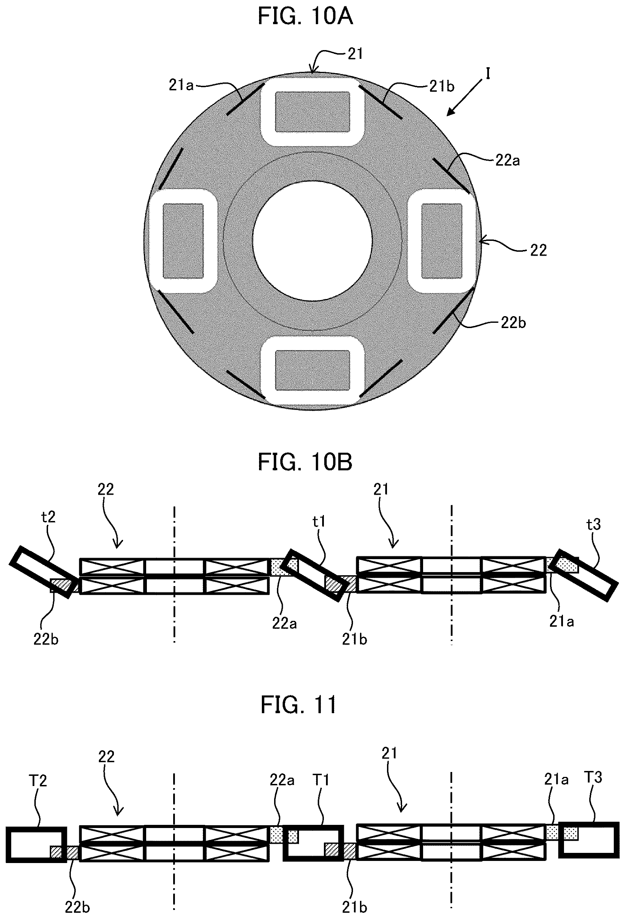

FIGS. 10A and 10B are diagrams illustrating connection in the case of a double pancake wound coil around which a tape conductor is wound. FIG. 10A illustrates a plan view of an example of a wire connection method for double pancake wound coils 21 and 22. FIG. 10B illustrates a conceptual side view including partial cross sections of the double pancake wound coils 21 and 22 of FIG. 10A as viewed in the arrow direction I.

Pancake winding is one of methods for winding a coil mainly using a tape conductor or a wide rectangular conductor, and is a winding method in which a conductor is wound one layer and the conductor is wound and stacked in the radial direction so that the next conductor overlaps the layer, and is called pancake winding because it has a flat pancake-shape finish. The double pancake winding has a shape in which two pancake wound coils are combined, and a terminal end portion (referred to as a lead) of the two pancake coils started to be wound from the inside is the outside. A pancake wound coil in which two pancake wound coils wound in directions opposite to each other are stacked and electrically connected at the center is called a connected double pancake wound coil. In either case, in the double pancake wound coil, the lead-out portion for flowing the current is located on the outer peripheral side of the coil. The use of the double pancake wound coil has an effect of facilitating the lead and connection for current introduction.

As illustrated in FIG. 10A, in order to connect the plurality of double pancake wound coils 21 and 22, lead wires 21a and 21b of the adjacent double pancake wound coils 21, lead wires 22a and 22b of the double pancake wound coils 22, and the like are installed so as to be straight.

As illustrated in FIG. 10B, the lead wire 22a of the double pancake wound coil 22 and the lead wire 21b of the double pancake wound coil 21 are connected via the connection tape conductor t1. The lead wire 22a and the lead wire 21b are directly connected to each other while the connection tape conductor t1 is twisted, and when the inter-coil distance between the lead wire 22a and the lead wire 21b is short, mounting becomes difficult. In this way, when the connection is made via the connection tape conductors t1, t2, and t3 having the same width, the connection tape conductors t1, t2, and t3 are inclined, so that it is difficult to gain a connection area.

FIG. 11 is a conceptual side view including a partial cross section of an example of a wire connection method of the pancake wound coil using the wide tape wires T1, T2, and T3 as viewed in the arrow direction I in FIG. 10A.

As illustrated in FIG. 11, when the positions of the lead wires 22a and 21b are different, the wide tape conductors T1, T2, and T3 are used.

This makes it possible to secure a sufficient connection area for the tape conductor T1 and connect the lead wire 22a and the lead wire 21b to each other, for example. Even when the tape conductors T1, T2, and T3 having a wide width are used, for example, both end portions of the tape conductor T1 having a wide width are connected to the lead wires 22a and 21b at two places by soldering. That is, there are two connection portions.

By using a tape having two connection portions but a wide width, it is possible to align the tapes in parallel and connect the tapes with a long connection length, and it is possible to reduce Joule heating at the connection portions.

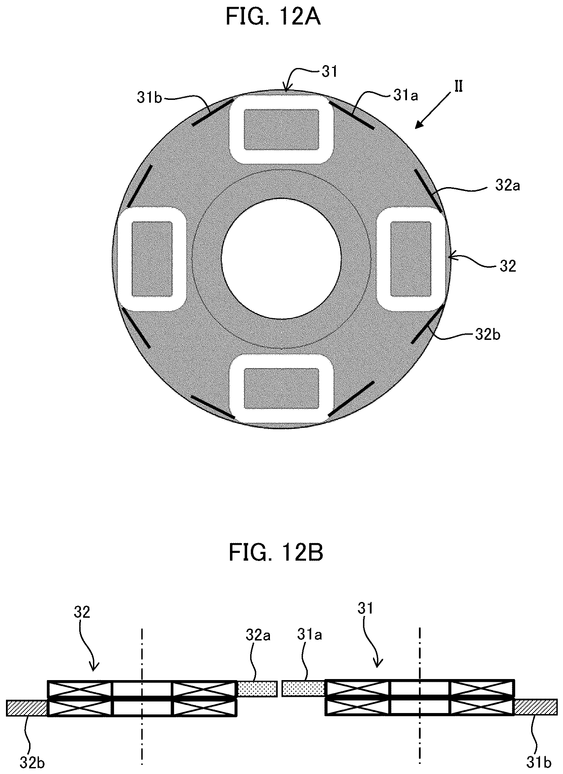

FIG. 12A is a view illustrating an example of a wire connection method of the double pancake wound coils 31 and 32 in which the lead-out portions are aligned. FIG. 12B is a conceptual side view including partial cross sections of the double pancake wound coils 31 and 32 of FIG. 12A as viewed in an arrow direction II.

In order to avoid connection via the connection tape conductor, as illustrated in FIGS. 12A and 12B, two types of the double pancake wound coil 31 and the double pancake wound coil 32 are prepared so that the lead wire 31a of the double pancake wound coil 31 and the lead wire 32a of the double pancake wound coil 32 are aligned. In this case, the lead wire 31a and the lead wire 32a can be arranged so as to be on a straight line in a plane perpendicular to the axis. In addition, since the double pancake wound coils 31 and 32 are aligned in the up-down direction (axial direction), it is possible to perform linear connection without interposing a connection tape conductor. Since the number of connection portions connected by solder can be reduced to half of one connection portion between the lead wire 31a and the lead wire 32a, Joule heating at the connection portion can be reduced to half.

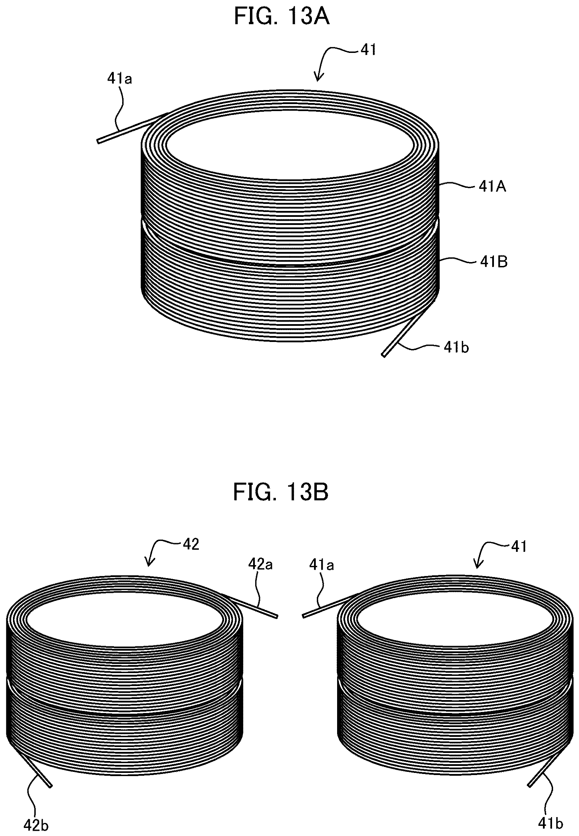

FIG. 13A is a perspective view of a layer-wound coil 41 in which lead-out portions 41a and 41b are located outside.

The layer winding is a general winding method of winding not only a tape-shaped conductor but also a wire material having a rectangular or round cross section. Specifically, the method is a method in which one layer of coil is formed in the winding axial direction in the adjacent row (winding axial direction of the coil) so as to be aligned with the once wound line, then the coil is wound on the one layer wound coil so as to be folded back, and the next layer is wound in the axial direction. In this winding method, the lead-out portions of the coil are located inside and outside the coil winding.

Therefore, in order to connect the coils side by side as in the magnet disc 3 (FIG. 1) of the present embodiment, it is necessary to route the connection wire from the lead inside the coil, and it becomes difficult to connect the adjacent coils.

Although the wire connection method of the double pancake wound coil has been described, the connection between the coils can be facilitated by similarly configuring the lead-out portion to be positioned on the outer side in the winding method of the coil called layer winding illustrated in FIG. 13A.

Therefore, if the layer winding is performed from the center of each of the two overlapped windings 41A and 41B (see FIG. 13A) in the same manner as the double pancake winding, it is possible to form the layer-wound coil 41 in which the lead-out portions 41a and 41b are located outside while the layer winding is performed. Note that the two overlapped windings 41A and 41B are electrically connected at the center.

Thus, if the layer-wound coils 41 having the lead-out portions 41a and 41b on the outer side are arranged, the connection between the adjacent coils is facilitated.

FIG. 13B is a perspective view of the layer-wound coils 41 and 42 in which the lead-out portions 41a, 41b, 42a, and 42b having the lead-out portions 41a and 42a aligned in the height direction are located outside.

As illustrated in FIG. 13B, similarly to the double pancake wound coil, the connection can be further facilitated by arranging the layer-wound coil 41 in which the two types of the lead-out portions 41a and 41b are located on the outer side and the layer-wound coil 42 in which the lead-out portions 42a and 42b are located on the outer side so that the lead-out portions are aligned in the height direction.

### <Magnetic refrigeration device R>

Next, a magnetic refrigeration device R using the stacked superconducting magnet J having the gap g of the present embodiment will be described.

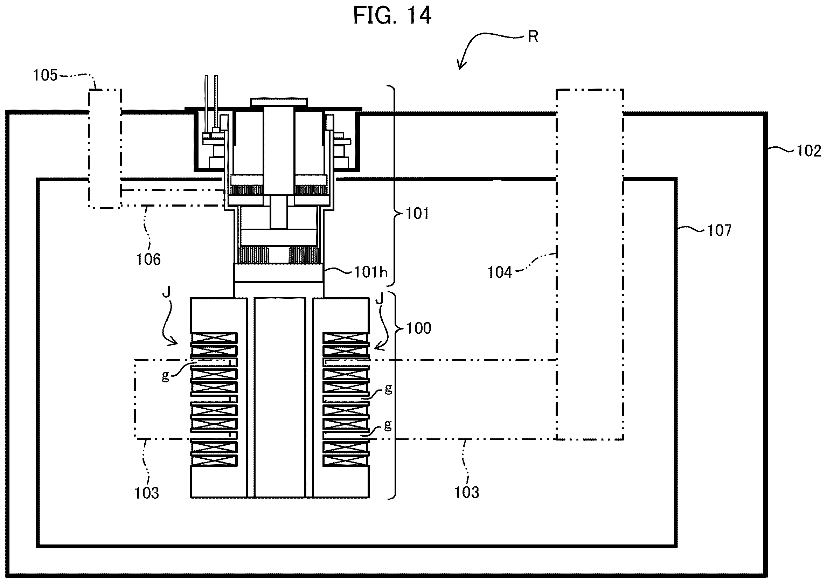

FIG. 14 is a conceptual diagram of the magnetic refrigeration device R using the stacked superconducting magnet J having the gap g of the present embodiment.

In the magnetic refrigeration device R, a two-stage rotary cooling device 101 is fixed in a vacuum vessel 102. A rotary superconducting magnet unit 100 composed of a stacked superconducting magnet (J) is suspended from a lowermost cold head 101h of the two-stage rotary cooling device 101.

The two-stage rotary cooling device 101 is configured to be rotatable. A magnet drive unit 105 rotates the rotary cold head 101h of the two-stage rotary cooling device 101 and the superconducting magnet unit 100 via a driving force transmission mechanism 106.

The rotary superconducting magnet unit 100 is stacked with a gap g so that a part of a magnetic refrigeration magnetic body unit 103 can be inserted. The magnetic refrigeration magnetic body unit 103 is installed so that a part thereof fits in the gap g of the stacked superconducting magnet (J).

Further, in order to work as the magnetic refrigeration device R, the magnetic refrigeration device pipe bub and the exhaust heat unit 104 are installed in the magnetic refrigeration magnetic body unit 103. For these magnetic refrigeration configurations, a radiation shield 107 for reducing radiant heat input is installed.

According to the above configuration, in the stacked magnet J having the plurality of gaps g, the attractive force working between the magnets can be canceled, and the generation of the electromagnetic force unbalance can be suppressed.

Therefore, it is possible to provide the rotary magnetic field generation device 8 and the magnetic refrigeration device R having the gap g in which the generation of the unbalanced electromagnetic force is suppressed and the electromagnetic force support structure is simplified.

### [Effects]

As described above, the rotary magnetic field generation device 8 (FIG. 1) according to the present embodiment is a magnetic field generation device having a disc (support disc 2 and magnet disc 3) (FIG. 3) in which a plurality of electromagnets 4 are arranged circumferentially, and a magnetic field working space (space of a gap g) formed by stacking the discs (magnet discs 3) at intervals such that the plurality of electromagnets 4 face each other. In the rotary magnetic field generation device 8, an electromagnetic force working between the electromagnets 4 stacked by the discs (support discs 2) is supported (FIG. 3). The magnetic yokes (end yokes 7) (FIG. 4) that reduce the electromagnetic force working between the electromagnets 4 are installed at both ends (ends jc1 and jc2) of the stacked discs (magnet discs 3). The electromagnets 4 in the discs (magnet discs 3) are disposed at the same phase positions in the disc (magnet disc 3) such that the magnetic fluxes are continuous in the axial direction of the electromagnet 4. The electromagnets 4 at the same phase positions are connected so as to be operated with the same current ("drive operation mode" and "persistent current mode operation") (FIGS. 5 and 6).

With such a configuration, the rotary magnetic field generation device 8 reduces the magnetic field intensity of the vertical component applied to the superconducting coils 1a, 1b, 1c, and 1d at the ends jc1 and jc2 by arranging the end yokes 7 at both ends (ends jc1 and jc2) of the magnet disc 3, causes more current to flow through the superconducting coils 1a, 1b, 1c, and 1d to generate an advantageous magnetic field, and supports the electromagnetic force working between the electromagnets 4 on which the support discs 2 (FIG. 3) are stacked by the mechanical supporting structure (<Achievement of electromagnetic force balance for each magnet>). Then, the rotary magnetic field generation device 8 connects the electromagnets 4 at the same phase positions so as to be operated with the same current (FIGS. 5 and 6), thereby preventing the change in the magnetomotive force of the electromagnet and suppressing the generation of the unbalanced electromagnetic force by preventing the magnitude of the current flowing through the electromagnet and the path of the current from changing (<Suppression of generation of unbalanced electromagnetic force>). As a result, it is possible to realize the rotary magnetic field generation device 8 that suppresses the generation of the unbalanced electromagnetic force while simplifying the electromagnetic force support structure.

In the rotary magnetic field generation device 8 (FIG. 1), the electromagnet 4 has a superconducting coil 1 (1a, 1b, 1c, and 1d) in which a magnetic pole (iron cores 4a1, 4b1, 4c1, and 4d1) is wound in a flat plate shape as an element coil 1 (1a, 1b, 1c, and 1d), and the element coil 1 is disposed in each magnet disc 3 stacked so that a magnetic flux generated by the element coil is continuous in an axial direction of the electromagnet 4 (FIG. 4).

In this way, when the magnet discs 4 are stacked in the up-down direction, the phases of the magnet discs 4 are arranged such that the magnetic flux generated by the superconducting coil 1 (1a, 1b, 1c, and 1d) is continuous in the axial direction of the electromagnet 4. Therefore, the magnetic flux is continuous in the axial direction and can be regarded as one rod magnet. By stacking a large number of superconducting coil groups, the working region can be increased to realize a large capacity.

In the rotary magnetic field generation device 8 (FIG. 1), the element coils (1a, 1e, 1j), (1b, 1f, 1k), (1c, 1g, 1m), and (1d, 1h, 1n) are arranged such that the magnetic fields generated in the adjacent element coils when the current flows are opposite to each other (white arrows in FIG. 4).

In this way, since the magnetic flux generated by the superconducting coil 1 (1a, 1b, 1c, and 1d) is continuous in the axial direction and can be regarded as one rod magnet, and the directions of the rod magnets are alternately changed, the magnetic moment can be configured to be zero as the entire magnet. Since there is no magnetic loss, the leakage magnetic field of the entire rotary magnetic field generation device 8 can be suppressed to be small.

In the rotary magnetic field generation device 8 (FIG. 1), the element coils (1a, 1e, 1j), (1b, 1f, 1k), (1c, 1g, 1m), and (1d, 1h, 1n) (FIGS. 5 and 6) are electrically connected such that currents flowing through the element coils (1a, 1e, 1j), (1b, 1f, 1k), (1c, 1g, 1m), and (1d, 1h, 1n) are continuous.

This makes it possible to keep the current or the current ratio flowing through the element coils (1a, 1e, 1j), (1b, 1f, 1k), (1c, 1g, 1m), and (1d, 1h, 1n) constant, prevent a change in the magnetomotive force generated by each element coil, and suppress the generation of the unbalanced electromagnetic force.

In the rotary magnetic field generation device 8 (FIG. 1), the element coils (1a, 1e, 1j), (1b, 1f, 1k), (1c, 1g, 1m), and (1d, 1h, 1n) are arranged at the same phase positions in the magnet discs 3 to constitute the coil columns (magnet columns) 9a, 9b, 9c, and 9d (FIGS. 5 and 6), and the element coils (1a, 1e, 1j), (1b, 1f, 1k), (1c, 1g, 1m), and (1d, 1h, 1n) (FIGS. 5 and 6) constituting the coil columns 9a, 9b, 9c, and 9d are excited by a continuous current.

In this way, it is possible to ensure that the coil columns 9a, 9b, 9c, and 9d configured in the vertical direction (axial direction of the electromagnet 4) have the same current, and it is possible to suppress the generation of the unbalanced electromagnetic force.

In the rotary magnetic field generation device 8 (magnetic field generation device) (FIG. 1), the current ratio or the current flowing through each of the element coils (1a, 1e, 1j), (1b, 1f, 1k), (1c, 1g, 1m), and (1d, 1h, 1n) constituting the coil columns 9a, 9b, 9c, and 9d (FIGS. 5 and 6) is maintained at a predetermined value.

In this way, by keeping the operating current ratio of each element coil constant, it is possible to prevent a change in the magnitude of the current flowing through each element coil and to suppress the generation of the unbalanced electromagnetic force.

In the rotary magnetic field generation device 8 (magnetic field generation device) (FIG. 1), current supply to the coil columns 9a, 9b, 9c, and 9d (FIG. 5) connected in parallel causes current to flow from one current path (see reference numeral A in FIG. 5).

For example, as illustrated in FIG. 5, current supply to the four coil columns 9a, 9b, 9c, and 9d connected in parallel is supplied through one current path. Since there is only one current path in each of the coil columns 9a, 9b, 9c, and 9d, the currents flowing through the element coils in the coil columns 9a, 9b, 9c, and 9d are always equal, and the ratio is kept constant. The coil columns 9a, 9b, 9c, and 9d configured in the longitudinal direction (axial direction of the electromagnet 4) have the same current. As a result, the currents flowing through the element coils (1a, 1e, 1j), (1b, 1f, 1k), (1c, 1g, 1m), and (1d, 1h, 1n) in the coil columns 9a, 9b, 9c, and 9d are equal, and the ratio is kept constant, so that the generation of the unbalanced electromagnetic force can be suppressed.

Further, in the case of the persistent current mode operation, the rotary magnetic field generation device 8 is connected in units of coil columns 9a, 9b, 9c, and 9d as illustrated in FIG. 5, and forms a persistent current loop in units of the coil columns 9a, 9b, 9c, and 9d, so that it is possible to suppress generation of an unbalanced electromagnetic force generated in the coil columns 9a, 9b, 9c, and 9d.

In the rotary magnetic field generation device 8 (FIG. 1), the element coils (1a, 1e, 1j), (1b, 1f, 1k), (1c, 1g, 1m), and (1d, 1h, 1n) constituting the coil columns 9a, 9b, 9c, and 9d (FIG. 6) are connected in series, and a current flows.

In this way, the current flowing through each element coil is connected so as to be continuous, and the current is supplied, so that it is possible to prevent a change in the magnitude of the current flowing through each element coil. In addition, the coil columns 9a, 9b, 9c, and 9d configured in the longitudinal direction (axial direction of the electromagnet 4) are excited by a continuous current. Accordingly, the generation of the unbalanced electromagnetic force can be suppressed.

Further, in the case of the persistent current mode operation, the rotary magnetic field generation device 8 can suppress the generation of the unbalanced electromagnetic force generated in the coil column by connecting all the element coils in a row as illustrated in FIG. 6 to form the persistent current mode circuit with the entire magnet.

In the rotary magnetic field generation device 8 (FIG. 1), the electromagnet 4 is a superconducting magnet.

In this way, energy consumption can be reduced by using a superconducting magnet as the electromagnet 4. Further, in the rotary magnetic field generation device 8 using a superconducting magnet, electromagnetic force balance can be maintained.

In the rotary magnetic field generation device 8 (magnetic field generation device) (FIG. 1), the electromagnet 4 is a superconducting magnet, and the electromagnet 4 is operated in a persistent current mode.

This makes it possible to maintain electromagnetic force balance in the rotary magnetic field generation device 8 using a superconducting magnet.

In the rotary magnetic field generation device 8 (magnetic field generation device) (FIG. 1), the electromagnet 4 constitutes an element persistent current mode magnet 10 (FIG. 7) having an element coil 1 and a persistent current switch 11 to which the element coil 1 is connected.

In this way, in the rotary magnetic field generation device 8 using the element persistent current mode magnet 10, the electromagnetic force balance can be maintained in the case of the persistent current mode operation.

In addition, in the element persistent current mode magnet 10 configured by the superconducting coil and the persistent current switch 11, it is possible to solder-connect the module coils by normal-conducting wiring, it is convenient to manufacture a stacked superconducting magnet, and it is possible to realize a persistent current mode magnet having a substantially stable magnetic field.

In the rotary magnetic field generation device 8 (FIG. 8), when quenching occurs in the electromagnets 4 at the same phase positions in the disc arranged such that the magnetic fluxes continues in the axial direction of the electromagnets 4, the persistent current switches 11 of the element persistent current mode magnets at the same phase positions are all turned off.

That is, in a case where a stacked magnet is constituted by a module coil, when any one of the module coils is quenched and the coil transitions to a normal conduction state, current attenuation occurs in a persistent current loop of the module coil, and as a result, there is a problem that a magnetic field of the module coil is lost and an unbalanced electromagnetic force is generated.

The rotary magnetic field generation device 8 can minimize the generation of the unbalanced electromagnetic force by immediately turning off the persistent current switch 11 of each module coil at the same time as detecting the occurrence of the quench.

In the rotary magnetic field generation device 8 (magnetic field generation device) (FIGS. 8 and 9), the diode 12 or a resistance that recovers stored energy of the electromagnet when quenching occurs is connected in parallel to a circuit that causes a current to flow in the electromagnet 4.

In this way, even if quenching occurs, it is possible to prevent the enthalpy of the own winding and the diode 12 of the energy recovery circuit 50 (large loop) from recovering the stored energy of the coil and causing burnout.

In the rotary magnetic field generation device 8 (magnetic field generation device) (FIG. 10A), the lead-out portion 41a and the like, which are current introduction portions of the element coil 1, are positioned on the outer peripheral side of the element coil.

In this way, the positions of the lead-out portions 41a of the element coils 1 can be aligned, and for example, it is easy to use the double pancake wound coil 21 (FIG. 10A, FIG. 12A) around which the tape conductor is wound.

In the rotary magnetic field generation device 8 (FIG. 1), the element coil 1 includes the pancake wound coil 21 (FIG. 10A, FIG. 12A).

In this way, for example, the double pancake wound coil 21 (FIG. 10A) around which the tape conductor is wound can be used.

In the rotary magnetic field generation device 8 (FIG. 1), the element coil 1 is composed of the pancake wound coil 21 (FIG. 10A, FIG. 12A), and current connections between the pancake wound coils 21 are made by conductors larger than the conductor size of the windings of the pancake wound coils 21.

In this way, by using a tape having a wide width, it is possible to align the tapes in parallel and connect the tapes with a long connection length, and it is possible to reduce Joule heating at the connection portions. For example, even in the case of using the double pancake wound coil 21 (FIG. 10A) around which the tape conductor is wound, it is possible to secure a sufficient connection area and perform connection by using a tape conductor having a large width.

Note that, in connection of adjacent element coils, aligning lead-out portions of the element coils and making inter-element connection via a wide conductive tape may be applied alone or in combination.

In the rotary magnetic field generation device 8 (FIG. 1), the winding lead-out portions of the element coils 1 are aligned in the axial direction of the element coils 1 between the element coils (FIG. 11).

In this way, the lead wires 21a (FIG. 10A) can be arranged so as to be linear in the plane, and also aligned in the up-down direction, so that the lead wires can be linearly connected without interposing the connection tape conductor. For example, if the layer-wound coils 41 having the lead-out portions 41a and 41b (FIG. 13A, FIG. 14A) on the outer side are arranged, the adjacent coils can be easily connected. As a result, since the number of connection portions can be reduced to half, Joule heating at the connection portion can be reduced to half.

The magnetic refrigeration device R (FIG. 3) using the rotary magnetic field generation device 8 (FIG. 1).

The magnetic refrigeration device R (FIG. 3) can simplify the structure of the magnet device for magnetic refrigeration and increase the capacity of the device by using the rotary magnetic field generation device 8 (FIG. 1) capable of suppressing the generation of the unbalanced electromagnetic force.

### <Other embodiments>

The present invention is not limited to the above embodiments, and includes other modifications and applications without departing from the gist of the present invention described in the claims.

The above embodiments have been described in detail for clear understanding of the present invention, and are not necessarily limited to those having all the described configurations. In addition, some of the configurations of a certain embodiment may be replaced with the configurations of the other embodiments, and the configurations of the other embodiments may be added to the configurations of the a certain embodiment. In addition, some of the configurations of each embodiment may be omitted, replaced with other configurations, and added to other configurations.

### Industrial Applicability

The magnetic field generation device of the present invention is a magnet device for magnetic refrigeration using a magnetocaloric effect, and can be used for liquefying liquid hydrogen, and the like.

### Reference Signs List

1, 1a, 1b, 1c, 1d, 1e, 1f, 1g, 1h, 1j, 1k, 1m, 1n superconducting coil (electromagnet, superconducting magnet, element coil, and coil)
2 disc
3 magnet disc (disc)
4a, 4b, 4c, 4d electromagnet (superconducting magnet)
4a1, 4b1, 4c1, 4d1 iron core (magnetic pole)
6 shaft
7 end yoke (magnetic yoke)
8 rotary magnetic field generation device (magnetic field generation unit and magnetic field generation device)
9, 9a, 9b, 9c, 9d coil column (magnet column)
10, 10a, 10b, 10c, 10d, 10e, 10f, 10g, 10h, 10j, 10k, 10m,
10n module coil (element persistent current mode magnet)
11, 11a, 11b, 11c, 11d, 11e, 11f, 11g, 11h, 11j, 11k, 11m,
11n persistent current switch
11t, 11ta to 11tn heater (persistent current switch)
12 diode
21, 22, 31, 32 pancake wound coil
21a, 21b, 22a, 22b, 31a, 32a lead wire (lead-out portion) lead-out portion 41a, 41b, 42a, 42b
50 energy recovery circuit
100 rotary superconducting magnet unit (magnetic field generation device)
101 two-stage rotary cooling device (magnetic refrigeration device)
101h cold head (magnetic refrigeration device)
102 vacuum vessel (magnetic refrigeration device)
103 magnetic refrigeration magnetic body unit (magnetic refrigeration device)
104 exhaust heat unit (magnetic refrigeration device)
107 radiation shield (magnetic refrigeration device)
g gap (magnetic field working space)
J, Ja, Jb, Jc, Jd electromagnet (electromagnet at same phase position)
jc1, jc2 end
R magnetic refrigeration device

## Claims

1. A magnetic field generation device comprising:
a disc in which a plurality of electromagnets are arranged circumferentially; and
a magnetic field working space that is formed by stacking the discs at intervals such that the plurality of electromagnets face each other, wherein
an electromagnetic force working between the electromagnets stacked by the disc is supported,
a magnetic yoke that reduces an electromagnetic force working between the electromagnets is installed at both ends of the stacked discs,
the electromagnets in the disc are disposed at same phase positions in the disc such that magnetic fluxes are continuous in an axial direction of the electromagnets, and
the electromagnets at the same phase positions are connected so as to be operated with a same current.

2. The magnetic field generation device according to claim 1, wherein
the electromagnet includes a superconducting coil having a magnetic pole wound in a flat plate shape as an element coil, and
the element coil is disposed in each of the discs stacked such that magnetic flux generated by the element coil is continuous in an axial direction of the electromagnet.

3. The magnetic field generation device according to claim 2, wherein
the element coils are arranged such that magnetic fields generated in the adjacent element coils when a current flows are opposite to each other.

4. The magnetic field generation device according to claim 2, wherein
the element coils are electrically connected such that currents flowing through the element coils are continuous.

5. The magnetic field generation device according to claim 2, wherein
the element coils are arranged at same phase positions in each of the discs to constitute a coil column, and each of the element coils constituting the coil column is excited by a continuous current.

6. The magnetic field generation device according to claim 5, wherein
a current ratio or a current flowing through each of the element coils constituting the coil column is maintained at a predetermined value.

7. The magnetic field generation device according to claim 5, wherein
a current is supplied to the coil columns connected in parallel flows from one current path.

8. The magnetic field generation device according to claim 5, wherein
the element coils constituting the coil column are connected in series, and a current flows thereto.

9. The magnetic field generation device according to claim 1, wherein
the electromagnet is a superconducting magnet.

10. The magnetic field generation device according to claim 1, wherein
the electromagnet is a superconducting magnet, and
the electromagnet is operated in a persistent current mode.

11. The magnetic field generation device according to claim 2, wherein
the electromagnet constitutes an element persistent current mode magnet including the element coil and a persistent current switch to which the element coil is connected.

12. The magnetic field generation device according to claim 11, wherein
the persistent current switches of the element persistent current mode magnets at the same phase positions are all turned off when quenching occurs in the electromagnets at the same phase positions in the disc arranged such that the magnetic fluxes are continuous in the axial direction of the electromagnets.

13. The magnetic field generation device according to claim 1, wherein
a diode or a resistance that recovers stored energy of the electromagnets when quenching occurs is connected in parallel to a circuit that causes a current to flow in the electromagnets.

14. The magnetic field generation device according to claim 2, wherein
a lead-out portion which is a current introduction portion of the element coil is positioned on an outer peripheral side of the element coil.

15. The magnetic field generation device according to claim 2, wherein
the element coil includes a pancake wound coil.

16. The magnetic field generation device according to claim 2, wherein
the element coil includes a pancake wound coil, and current connection between the pancake wound coils is made by a conductor larger than a conductor size of a winding of the pancake wound coil.

17. The magnetic field generation device according to claim 2, wherein
winding lead-out portions of the element coils are aligned in an axial direction of the element coils between the element coils.

18. A magnetic refrigeration device comprising:
the magnetic field generation device according to any one of claims 1 to 16.
